# EUROPÄISCHE PATENTSCHRIFT

(11) **EP 2 550 236 B1**
(45) Veröffentlichungstag und Bekanntmachung des Hinweises auf die Patenterteilung: **29.04.2020**
(21) Anmeldenummer: 11708404.6
(22) Anmeldetag: 03.03.2011
(51) Int. Cl.: C01B 17/04

(54) **VORRICHTUNG UND VERFAHREN ZUR KONDENSATION, ABSCHEIDUNG UND LAGERUNG VON FLÜSSIGEM SCHWEFEL IN EINER CLAUS-ANLAGE**
DEVICE AND METHOD FOR CONDENSING, SEPARATING, AND STORING LIQUID SULFUR IN A CLAUS PLANT
DISPOSITIF ET PROCÉDÉ POUR LA CONDENSATION, LA SÉPARATION ET LE STOCKAGE DE SOUFRE LIQUIDE DANS UNE INSTALLATION CLAUS

(30) Priorität: 26.03.2010 DE 102010013052; 22.03.2010 DE 102010012286
(43) Veröffentlichungstag der Anmeldung: 30.01.2013
(73) Patentinhaber: thyssenkrupp Industrial Solutions AG, 45143 Essen (DE)
(72) Erfinder: THIELERT, Holger, 44379 Dortmund (DE)
(74) Vertreter: thyssenkrupp Intellectual Property GmbH
(86) Internationale Anmeldenummer: PCT/EP2011/001058
(87) Internationale Veröffentlichungsnummer: WO 2011/116876

(56) Entgegenhaltungen:
- EP-A1- 1 090 675
- US-A- 3 532 468
- US-A- 4 071 607

## Beschreibung

Die Erfindung betrifft eine Vorrichtung zur Kondensation, Abscheidung und Lagerung von Schwefel in einer Claus-Anlage, wobei die Claus-Anlage aus einem Claus-Ofen, einem Abhitzekessel und einem Claus-Reaktor besteht, und diese Anlagenteile auf einem Boden oder einer vergleichbaren Vorrichtung gelagert werden, und unterhalb der Claus-Anlage und gegebenenfalls auch einer vorgelagerten Vorrichtung zur Gaswäsche eine Tauchkammer vorgesehen ist, die den Schwefel siphonartig aufnimmt, wobei der überschüssige Schwefel von der Tauchkammer in einen Behälter fließen kann, in dem die Tauchkammer angeordnet ist. Die Erfindung betrifft auch ein Verfahren, mit dem flüssiger Schwefel in eine Tauchkammer geleitet wird, wobei die Tauchkammer auf einem Höhenniveau unterhalb des Abhitzekessels und dem Claus-Reaktor angeordnet ist, so dass der flüssige Schwefel ohne weitere Förderung in die Tauchkammer gelangt.

Bei der Herstellung von technischen Gasen fällt oftmals ein schwefelhaltiges Gas an, welches von den Schwefelverbindungen gereinigt werden muss. Die Reinigung erfolgt typischerweise durch eine Gaswäsche, bei der das schwefelhaltige Gas mit einer Absorptionsflüssigkeit in Kontakt gebracht wird, welche in einem nachfolgenden Desorptionsschritt diese Schwefelverbindungen wieder freigibt, so dass diese einem Claus-Prozess zugeführt werden können. Typische technische Gase, die von Schwefelverbindungen gereinigt werden müssen, sind Kokereigas, Erdgas oder Raffineriegase.

Durch den Claus-Prozess werden die Schwefelverbindungen in elementaren Schwefel überführt, wobei dies zunächst durch Verbrennen der Schwefelverbindungen mit einem sauerstoffhaltigen Gas erfolgt. Dabei fällt elementarer Schwefel an, während Kohlenstoff und Wasserstoff zu Kohlendioxid und Wasser reagieren. Das Verbrennungsgas wird in einen Abhitzekessel geleitet, in dem der Schwefel kondensiert und in flüssiger Form anfällt. Dieser kann dann einer Weiterverwendung oder Entsorgung zugeführt werden. Das auskondensierte und von Schwefel befreite Gas aus dem Abhitzekessel wird in einen Claus-Reaktor geleitet, in dem die restlichen Schwefelverbindungen einer Verbrennung zugeführt werden, wobei Schwefeldioxid erhalten wird, welches mit restlichem Schwefelwasserstoff an einem Katalysator zu elementarem Schwefel umgesetzt wird. Die Reaktionsstufe zur Umsetzung von Schwefeldioxid mit Schwefelwasserstoff kann auch mehrfach vorhanden sein, um eine möglichst vollständige Entschwefelung zu erzielen.

Eine typische Ausführungsform für den Claus-Prozess gibt die EP 1527013 B1. In dieser Lehre wird ein Verfahren zur Abtrennung von Schwefelwasserstoff aus Koksofen-gas beansprucht, bei dem der Schwefelwasserstoff durch Gaswäsche mit einer Absorptions-flüssigkeit aus dem Koksofengas entfernt wird, die beladene Absorptionsflüssigkeit regeneriert wird, und die beladene Absorptionsflüssigkeit und der dabei in konzentrierter Form anfallende Schwefelwasserstoff der Claus-Anlage zugeführt wird, wobei der Schwefelwasserstoff in einem Claus-Kessel der Claus-Anlage mit Luftsauerstoff unter Bildung von elementarem Schwefel umgesetzt wird, und das den Claus-Kessel verlassende Prozessgas in einem Abhitzekessel auf eine zur Kondensation des Schwefels erforderliche Temperatur abgekühlt wird, nach Abscheidung des Schwefels erwärmt und einem Reaktionsofen der Claus-Anlage zugeführt wird, in welchem die Schwefelverbindungen an einem Katalysator zu elementarem Schwefel umgesetzt werden, und wobei das den Reaktionsofen verlassende Prozessgas auf eine zur Kondensation des Schwefels erforderliche Temperatur abgekühlt wird, sowie der kondensierte Schwefel abgeschieden wird, wobei erfindungsgemäß die Claus-Anlage mit nur einem einzigen Reaktionsofen betrieben und in diesem eine Arbeitstemperatur von weniger als 250°C eingestellt wird, und das den Reaktionsofen verlassende Prozessgas nach Abscheidung des kondensierten Schwefels mit einem im Reaktionsofen nicht umgesetzten Restgehalt an Schwefelwasserstoff in das zu reinigende Koksofengas vor der Gaswäsche zurückgeführt wird. Die Lehre gibt keinen Hinweis zur Lagerung und Weiterverarbeitung für den bei dem Verfahren anfallenden Schwefel.

Dieser wird in der Regel in flüssiger Form abgeschieden und nach der Erstarrung gelagert. Aus dieser festen Form ist der Schwefel in vielfältiger Form weiterverwendbar, so z.B. als Rohstoff für chemische Synthesen oder für die Herstellung von Schwefelsäure. Bei der Kondensation des Schwefels fällt ein Teil des Schwefels in flüssiger Form an, während der Rest in Form feiner Tröpfchen in dem auskondensierten Gas verbleibt. Um die Bildung von zur Abscheidung geeignet großer Schwefeltröpfchen zu ermöglichen, kann das auskondensierte Gas in eine siphonartige Vorrichtung geleitet werden, in der eine nahezu vollständige Abscheidung des gesamten Schwefels erfolgt.

Ein Beispiel für eine Vorrichtung, die eine vollständige Kondensation des in einem schwefelhaltigen Verbrennungsgas enthaltenen Schwefels ermöglicht, gibt die DE 2756992 C2. Diese Lehre offenbart eine Vorrichtung zur Abscheidung von Schwefeltröpfchen aus einem Gasstrom, vorzugsweise aus einem Reaktionsgasstrom eines Claus-Kontaktes, bestehend aus einem Gehäuse, einem in dem Gehäuse zwischen Rohrböden angeordneten Rohrbündel, Stutzen am Gehäuse für die Zu- und Abführung eines das Rohrbündel umströmenden Kühlmittels und je einem Eintritts- und Austrittsstutzen für den Gasstrom an dem Gehäuse an- bzw. abströmseitig des Rohrbündels, wobei erfindungsgemäß in dem Gehäuse zwischen dem gasaustrittsseitigen Rohrboden des Rohrbündels und dem Gasaustrittsstutzen ein von dem Gasstrom durchströmtes Abscheideaggregat und am Gehäuseboden an- und abströmseitig des Abscheideaggregats Ablauföffnungen für den vor bzw. in und hinter dem Abscheideaggregat abgeschiedenen Schwefel angeordnet sind. In einer Ausführungsform enthält die Vorrichtung Leitungen, die den flüssigen Schwefel von einem Abscheideaggregat in einen Schwefelsammelbehälter leiten und dort siphonartig eintauchen.

Die genannte Ausführungsart besitzt den Nachteil, dass der aus dem Abführungsstutzen abgezogene Schwefel nicht weiter gelagert werden kann, sondern in flüssiger Form weitertransportiert werden muss. Auch ist keine Zuführungsmöglichkeit für flüssigen Schwefel vorhanden, wie er beispielsweise in einem Abhitzekessel einer Claus-Anlage anfällt.
Als weiterer Stand der Technik im Hinblick auf die Oberbegriffe der unabhängigen Ansprüche können EP 1 090 675 A1, US 4,071,607 und US 3,532,468 genannt werden.

Es besteht deshalb die Aufgabe, eine Vorrichtung zur Verfügung zu stellen, welche eine Kondensation von Schwefel aus einem schwefelhaltigen Gas ermöglicht, wobei auch in dem Gas enthaltene feine Schwefeltröpfchen mitkondensieren sollen, und auch eine Zuführung von flüssigem, bereits kondensiertem Schwefel aus einem Abhitzekessel möglich ist. Die Vorrichtung soll auch eine Lagerung des Schwefels ermöglichen.

Die Erfindung löst diese Aufgabe durch eine Vorrichtung, die aus einer siphonartigen Tauchkammer besteht, welche in einem Behälter angeordnet ist, wobei dieser Behälter gegenüber den übrigen Anlagenteilen der Claus-Anlage erniedrigt angeordnet ist, so dass der Schwefel ohne weitere Förderung in die Tauchkammer gelangen kann, und die Tauchkammer siphonartig gestaltet ist, so dass das Gas gegen den Behälter abgetaucht ist.

Aus der Tauchkammer gelangt der flüssige Schwefel über die hinter dem Siphon angeordnete Austrittsvorrichtung, von wo aus er in den Behälter gelangt. Von dort kann er abtransportiert werden.

Beansprucht wird insbesondere eine Vorrichtung zur Kondensation, Abscheidung und Lagerung von flüssigem Schwefel, umfassend
- eine Gaswäscheanlage, bei der der Schwefelwasserstoff durch Gaswäsche mit einer Absorptionsflüssigkeit aus dem Koksofengas entfernt wird, die beladene Absorptionsflüssigkeit regeneriert und der in konzentrierter Form anfallende Schwefelwasserstoff der Claus-Anlage, bestehend aus Claus-Ofen, Abhitzekessel und Claus-Reaktor zugeführt wird, und
- einen Claus-Ofen, in dem die Schwefelverbindungen mit Luftsauerstoff zu elementarem Schwefel verbrannt werden,
- einen Abhitzekessel, in dem das den Claus-Ofen verlassende Prozessgas auf eine zur Kondensation des Schwefels erforderliche Temperatur gekühlt wird, nach Abscheidung des Schwefels wieder erwärmt und einem Claus-Reaktor zugeführt wird,
- einen Claus-Reaktor, in dem ein Teil des restlichen Schwefelwasserstoffs verbrannt wird, und das sich bildende Schwefeldioxid an einem Katalysator mit restlichen Schwefelwasserstoff zu Schwefel umgesetzt wird,
- eine dem Claus-Reaktor zugehörige Kondensationskammer,
   und welche dadurch gekennzeichnet ist, dass
- die Claus-Anlage und Gaswäscheanlage gegenüber einem beheizbaren ebenerdig aufgestellten Behälter, in dem eine siphonartige Tauchkammer angeordnet ist, auf einer Plattform erhöht gelagert werden, so dass keine Fördereinrichtung zur Förderung des Schwefels in die Tauchkammer erforderlich sind, und
- wobei der Höhenunterschied zwischen der Claus-Anlage und der Gaswäscheanlage gegenüber dem tiefsten Schwefelabzugspunkt der Tauchkammer mindestens 4,00 Meter beträgt.

Der Behälter wird ebenerdig aufgestellt, worunter eine Aufstellung auf angenähertem Erdniveau zu verstehen ist. Eine Tiefgrube mit einer deutlichen Absenkung des Behälters, wie sie häufig bei Claus-Anlagen zur Lagerung des Schwefels anzutreffen ist, und den damit verbundenen Kosten, ist nicht erforderlich.

Der Behälter und die Tauchkammer können prinzipiell aus einem beliebigen Material gefertigt sein. Um bei den Temperaturen des flüssigen Schwefels ausreichend korrosionsbeständig zu sein, sind der Behälter und die Tauchkammer in einer bevorzugten Ausführungsform aus Stahl gefertigt. Der Behälter ist beheizbar, um den Schwefel darin ständig flüssig zu halten. Auch die Tauchkammer kann beheizbar oder wärmeisoliert sein.

Um die Tauchkammer optimal betreiben zu können, muss der Schwefel auch in der Tauchkammer in einer flüssigen Form vorliegen, damit der Siphon seine Funktion ausüben kann. Dies kann im Betrieb durch eine ausreichende Zuführung von Schwefelkondensat geschehen. Hierzu kann die Tauchkammer auch mit wärmeisolierenden Wandmaterialien ausgestattet sein. Ist eine ausreichende Zufuhr von flüssigem Schwefel nicht immer gewährleistet, so kann die Tauchkammer auch mit einer Vorrichtung zum Erhitzen des Schwefels ausgestattet sein, um eine Verfestigung des Schwefels in der Tauchkammer zu vermeiden.

Der Claus-Anlage oder dem Behälter mit der Tauchkammer können Auffangbehälter oder Lagerbehälter zugeordnet sein, welche mit dem Behälter und mit der Tauchkammer über Rohrleitungen verbunden sind. Auch der oder die Lager- oder Auffangbehälter sind in einer bevorzugten Ausführungsform aus Stahl gefertigt. Durch die Art der Aufstellung wird auch ein erhebliches Platzvolumen eingespart.

Tauchflaschen, welche in Claus-Anlagen nach dem Stand der Technik ein unerwünschtes Entweichen von entschwefeltem Gas verhindern, sind nicht mehr erforderlich. Die Installation von Sicherheitstauchflaschen, beispielsweise für Prozessgas am Brenner, ist erfindungsgemäß jederzeit möglich.

In einer Ausführungsform der Vorrichtung ist der Claus-Reaktor in der Claus-Anlage mehrfach vorhanden. Dies entspricht Ausführungsformen, wie sie im Stand der Technik üblich sind. In einer weiteren Ausführungsform ist es jedoch auch möglich, den Claus-Reaktor nur einfach vorzusehen, wie es beispielhaft in der EP 1527013 B1 ausgeführt ist. Schließlich kann die erfindungsgemäße Vorrichtung auch Pumpen oder Förderungseinrichtungen für den flüssigen Schwefel enthalten. Die Vorrichtung oder Anlage kann beispielhaft auch Gebläse, Abscheider, Schalldämpfer, Speicherbehälter, oder Entgaser umfassen. Der Behälter kann selbstverständlich auch mit Aufhängevorrichtungen zum Abtransport ausgestattet sein.

Um die Claus-Anlage gegenüber der Tauchkammer und dem Behälter erhöht aufstellen zu können, ist diese auf einer Plattform gelagert. Dies kann beispielhaft ein Gitterboden sein, welcher dann auf Stelzen gelagert wird.

Beansprucht wird auch ein Verfahren zur Kondensation, Abscheidung und Lagerung von flüssigem Schwefel aus einem Claus-Prozess. Beansprucht wird insbesondere ein Verfahren zur Kondensation, Abscheidung und Lagerung von flüssigem Schwefel, wobei
- der Schwefelwasserstoff durch Gaswäsche mit einer Absorptionsflüssigkeit aus dem Koksofengas entfernt wird, die beladene Absorptionsflüssigkeit regeneriert und der in konzentrierter Form anfallende Schwefelwasserstoff der Claus-Anlage zugeführt wird, und
- der Schwefelwasserstoff in einem Claus-Ofen mit einem sauerstoffhaltigen Gas zu Schwefel umgesetzt wird, und das Verbrennungsgas in einen Abhitzekessel geführt wird, in dem der flüssige Schwefel kondensiert, und
- das abgekühlte Prozessgas in einen Claus-Reaktor geführt wird, in dem ein Teil des restlichen Schwefelwasserstoffes zu Schwefeldioxid verbrannt wird, und das Schwefeldioxid in dem Claus-Reaktor mit Schwefelwasserstoff zu Schwefel umgesetzt wird,
   und welches dadurch gekennzeichnet ist, dass
- der Schwefel siphonartig aus dem Abhitzekessel und aus dem Claus-Reaktor in eine Tauchkammer gegeben wird, die sich in einem tiefergelegenen Behälter befindet, welcher sich ebenerdig unterhalb des Höhenniveaus der gesamten Claus-Anlage befindet, und
- die Tauchkammer in einem Behälter untergebracht ist, in die der flüssige Schwefel aus der Tauchkammer fließt,
- wobei dieser beim Fluß durch Schwerkraft einen Höhenunterschied von mindestens 4,00 Meter überwindet.

Unter Schwefelwasserstoff wird dabei ein Gas oder eine Fraktion verstanden, welche als wesentlichen Bestandteil Schwefelwasserstoff enthält. Diese kann auch organische Schwefelverbindungen enthalten. In einer bevorzugten Ausführungsform wird der Schwefel flüssig in die Tauchkammer gegeben und in dem Behälter bei einer Temperatur von 110 bis 300°C gehalten. Ist ein ausreichender Fluss von Schwefel vorhanden, so bleibt dieser von sich aus flüssig. Es ist bevorzugt auch möglich, den Schwefel durch Erhitzen in der Tauchkammer bei einer Temperatur von 110 bis 300°C zu halten. Dies kann durch Heizeinrichtungen geschehen, die an der Tauchkammer angeordnet sind.

Die erfindungsgemäße Vorrichtung und das erfindungsgemäße Verfahren besitzen folgende Vorteile: Eine Förderung des flüssigen Schwefels aus der Claus-Anlage in die Lagerungseinrichtung ist nicht erforderlich, da die Rohrleitungen durch zu überwindenden Höhenunterschied kurz sind; eine Lagerung des Schwefels kann in dem nachgeordneten beheizbaren Behälter erfolgen, auch wenn der Anlage temporär kein Schwefel entnommen wird, so dass ein separater Lagertank entfällt. Eine Tiefgrube ist nicht erforderlich; die Tauchflaschen, welche in Claus-Anlagen nach dem Stand der Technik ein Entweichen von entschwefeltem Gas verhindern, sind nicht mehr erforderlich.

Die Erfindung wird anhand einer Zeichnung erläutert, wobei diese nur eine beispielhafte Ausführungsform der Erfindung wiedergibt. Aus einem Kokereigas (**1,** COG) wird mittels eines Gaswaschprozesses **(2)** ein schwefelhaltiges Konzentrat **(3)** gewonnen, welches in einem Claus-Ofen **(4)** mit Luftsauerstoff zu elementarem Schwefel, Wasser und Kohlendioxid verbrannt wird. Man erhält dabei elementaren Schwefel **(5),** welcher in gasförmiger Form anfällt. Dieser wird in einen Abhitzekessel **(6)** gegeben. Dabei werden durch Kondensation ein Restgas **(7)** und flüssiger Schwefel **(8)** erhalten, wobei das Restgas **(7)** noch schwefelhaltige Gase enthält. Diese werden in der Verbrennungsstufe **(9)** eines Claus-Reaktors vollständig verbrannt. Man erhält dabei Schwefeldioxid **(10).** Dieses wird in der Kontaktstufe **(11)** eines Claus-Reaktors und Kondensationskammer mit zugeführtem Schwefelwasserstoff aus dem Gaswaschprozess zu elementarem Schwefel umgesetzt. Dabei erhält man ein entschwefeltes Verbrennungsgas **(12)** oder "Off-Gas". Auch in dieser Stufe fällt elementarer Schwefel **(13)** in flüssiger Form an. Sämtliche Anlagenteile **(2 bis 11)** werden auf einem Boden **(14)** gelagert, welcher beispielhaft ein Gitterboden ist, der auf Stelzen **(15)** erhöht gelagert wird. Der flüssige Schwefel aus dem Abhitzekessel **(8)** und aus der Kontaktstufe **(11)** wird mittels Rohrleitungen in eine Tauchkammer **(16)** geführt, die mit einer Trennwand **(17)** ausgestattet ist. Dadurch wirkt diese als Siphon. Auf diese Weise kondensiert der gesamte Schwefel. Der Schwefel wird dort durch ständigen Nachfluß und durch Beheizen flüssig gehalten und wird über einen Ausfuhrstutzen **(18)** in einen Behälter **(19)** gegeben. Dort wird er, je nach Bedarf, in flüssiger oder fester Form gelagert.

### Bezugszeichenliste

- 1: Koksofengas
- 2: Gaswäsche
- 3: Schwefelhaltiges Konzentrat
- 4: Claus-Ofen
- 5: Elementarer gasförmiger Schwefel
- 6: Abhitzekessel
- 7: Schwefelhaltiges Restgas
- 8: Flüssiger elementarer Schwefel aus dem Abhitzekessel
- 9: Verbrennungsstufe des Claus-Reaktors
- 10: Schwefeldioxid
- 11: Kontaktstufe des Claus-Reaktors mit Kondensationskammer
- 12: Entschwefeltes Verbrennungsgas
- 13: Flüssiger elementarer Schwefel aus dem Claus-Reaktor
- 14: Boden
- 15: Stelzen
- 16: Tauchkammer
- 17: Trennwand
- 18: Ausfuhrstutzen
- 19: Behälter

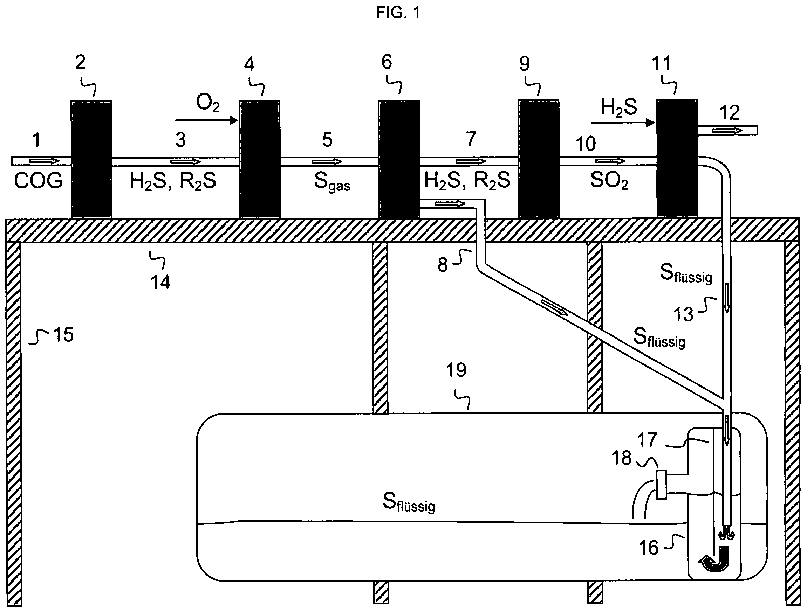

## Patentansprüche

1. Vorrichtung zur Kondensation, Abscheidung und Lagerung von flüssigem Schwefel, umfassend
• eine Gaswäscheanlage (2), bei der der Schwefelwasserstoff durch Gaswäsche mit einer Absorptionsflüssigkeit aus dem Koksofengas entfernt wird, die beladene Absorptionsflüssigkeit regeneriert und der in konzentrierter Form anfallende Schwefelwasserstoff der Claus-Anlage, bestehend aus Claus-Ofen (4), Abhitzekessel (6) und Claus-Reaktor (9) zugeführt wird, und
• einen Claus-Ofen (4), in dem die Schwefelverbindungen mit Luftsauerstoff zu elementarem Schwefel verbrannt werden,
• einen Abhitzekessel (6), in dem das den Claus-Ofen (4) verlassende Prozessgas auf eine zur Kondensation des Schwefels erforderliche Temperatur gekühlt wird, nach Abscheidung des Schwefels wieder erwärmt und einem Claus-Reaktor (9) zugeführt wird,
• einen Claus-Reaktor (9), in dem ein Teil des restlichen Schwefelwasserstoffs verbrannt wird, und das sich bildende Schwefeldioxid an einem Katalysator mit dem restlichen Schwefelwasserstoff zu Schwefel umgesetzt wird,
• eine dem Claus-Reaktor (9) zugehörige Kondensationskammer (11),
**dadurch gekennzeichnet, dass**
• die Claus-Anlage und die Gaswäscheanlage (2) gegenüber einem beheizbaren ebenerdig aufgestelltem Behälter (19), in dem eine siphonartige Tauchkammer (16) angeordnet ist, auf einer Plattform erhöht gelagert werden, so dass keine Fördereinrichtungen zur Förderung des Schwefels in die Tauchkammer erforderlich sind und
• wobei der Höhenunterschied zwischen der Claus-Anlage und der Gaswäscheanlage (2) gegenüber dem tiefsten Schwefelabzugspunkt der Tauchkammer (16) mindestens 4,00 Meter beträgt.

2. Vorrichtung zur Kondensation, Abscheidung und Lagerung von flüssigem Schwefel nach Anspruch 1, **dadurch gekennzeichnet, dass** der Behälter (19) und die Tauchkammer (16) aus Stahl gefertigt sind.

3. Vorrichtung zur Kondensation, Abscheidung und Lagerung von flüssigem Schwefel nach einem der Ansprüche 1 oder 2, **dadurch gekennzeichnet, dass** auch die Tauchkammer (16) mit einer Vorrichtung zum Erhitzen des Schwefels ausgestattet ist.

4. Vorrichtung zur Kondensation, Abscheidung und Lagerung von flüssigem Schwefel nach einem der Ansprüche 1 bis 3, **dadurch gekennzeichnet, dass** der Claus-Anlage oder dem Behälter (19) mit der Tauchkammer (16) Auffangbehälter oder Lagerbehälter zugeordnet sind, welche mit diesen über Rohrleitungen verbunden sind.

5. Vorrichtung nach Anspruch 4, **dadurch gekennzeichnet, dass** der oder die Lager- oder Auffangbehälter aus Stahl gefertigt sind.

6. Vorrichtung zur Kondensation, Abscheidung und Lagerung von flüssigem Schwefel nach einem der Ansprüche 1 bis 5, **dadurch gekennzeichnet, dass** der Claus-Reaktor mehrfach vorhanden ist.

7. Verfahren zur Kondensation, Abscheidung und Lagerung von flüssigem Schwefel, wobei
• der Schwefelwasserstoff durch Gaswäsche (2) mit einer Absorptionsflüssigkeit aus dem Koksofengas entfernt wird, die beladene Absorptionsflüssigkeit regeneriert und der in konzentrierter Form anfallende Schwefelwasserstoff der Claus-Anlage zugeführt wird, und
• der Schwefelwasserstoff in einem Claus-Ofen (4) mit einem sauerstoffhaltigen Gas zu Schwefel umgesetzt wird, und das Verbrennungsgas in einen Abhitzekessel (6) geführt wird, in dem der flüssige Schwefel kondensiert, und
• das abgekühlte Prozessgas in einen Claus-Reaktor (9) geführt wird, in dem ein Teil des restlichen Schwefelwasserstoffes zu Schwefeldioxid verbrannt wird, und das Schwefeldioxid in dem Claus-Reaktor (9) mit Schwefelwasserstoff zu Schwefel umgesetzt wird,
**dadurch gekennzeichnet, dass**
• der Schwefel siphonartig aus dem Abhitzekessel (6) und aus dem Claus-Reaktor (9) in eine Tauchkammer (16) gegeben wird, die sich in einem tiefergelegenen Behälter (19) befindet, welcher sich ebenerdig unterhalb des Höhenniveaus der gesamten Claus-Anlage befindet, und
• die Tauchkammer (16) in einem Behälter (19) untergebracht ist, in den der flüssige Schwefel aus der Tauchkammer (16) fließt,
• wobei dieser beim Fluß durch Schwerkraft einen Höhenunterschied von mindestens 4,00 Meter überwindet.

8. Verfahren zur Kondensation, Abscheidung und Lagerung von flüssigem Schwefel nach Anspruch 7, **dadurch gekennzeichnet, dass** der Schwefel bei einer Temperatur von 110 bis 300 °C in die Tauchkammer (16) gegeben wird.

9. Verfahren zur Kondensation, Abscheidung und Lagerung von flüssigem Schwefel nach einem der Ansprüche 7 oder 8, **dadurch gekennzeichnet, dass** der Schwefel durch Erhitzen in der Tauchkammer (16) und in dem Behälter (19) bei einer Temperatur von 110 bis 300 °C gehalten wird.

## Claims

1. Device for the condensation, separation and storage of liquid sulphur, comprising
• a gas scrubbing unit (2) by means of which the hydrogen sulphide is removed from the coke oven gas by gas scrubbing using an absorption liquid, the laden absorption liquid is regenerated and the hydrogen sulphide obtained in concentrated form is fed to the Claus plant consisting of Claus furnace (4), waste heat boiler (6) and Claus reactor (9), and
• a Claus furnace (4) in which the sulphur compounds are burnt with atmospheric oxygen to give elemental sulphur,
• a waste heat boiler (6) in which the process gas leaving the Claus furnace (4) is cooled to a temperature required for the condensation of the sulphur, is re-heated after separation of the sulphur and fed to a Claus reactor (9),
• a Claus reactor (9) in which part of the residual hydrogen sulphide is burnt, and the forming sulphur dioxide is converted to sulphur by reacting with the residual hydrogen sulphide in the presence of a catalyst,
• a condensation chamber (11) related to the Claus reactor (9),
**characterized in that**
• the Claus plant and the gas scrubbing unit (2) are supported on a platform at a higher level with respect to a heatable, ground-level vessel (19) with a siphon-type immersion chamber (16) disposed therein such that no conveying equipment is required for conveying the sulphur to the immersion chamber and
• wherein the difference in altitude between the Claus plant and the gas scrubbing unit (2) with respect to the lowest discharge point for sulphur in the immersion chamber (16) is at least 4.00 metres.

2. Device for the condensation, separation and storage of liquid sulphur according to Claim 1, **characterized in that** the vessel (19) and the immersion chamber (16) are made of steel.

3. Device for the condensation, separation and storage of liquid sulphur according to either of Claims 1 and 2, **characterized in that** the immersion chamber (16) as well is equipped with a device for the heating of sulphur.

4. Device for the condensation, separation and storage of liquid sulphur according to any of Claims 1 to 3, **characterized in that** collecting or storage tanks are allocated to the Claus plant or the vessel (19) housing the immersion chamber (16), these tanks being piped to the Claus plant and the vessel.

5. Device according to Claim 4, **characterized in that** the storage or collecting tank(s) is/are made of steel.

6. Device for the condensation, separation and storage of liquid sulphur according to any of Claims 1 to 5, **characterized in that** there are several Claus reactors.

7. Process for the condensation, separation and storage of liquid sulphur, in which
• the hydrogen sulphide is removed from the coke oven gas by gas scrubbing (2) using an absorption liquid, the laden absorption liquid is regenerated and the hydrogen sulphide obtained in concentrated form is fed to the Claus plant, and
• the hydrogen sulphide is converted to sulphur in a Claus furnace (4) by reacting with an oxygen-containing gas, and the combustion gas is fed to a waste heat boiler (6) in which the liquid sulphur condenses, and
• the cooled process gas is fed to a Claus reactor (9) in which part of the residual hydrogen sulphide is burnt to form sulphur dioxide, and the sulphur dioxide is converted to sulphur by reacting with hydrogen sulphide in the Claus reactor (9),
**characterized in that**
• the sulphur is fed in a siphon manner from the waste heat boiler (6) and the Claus reactor (9) to an immersion chamber (16) housed in a vessel (19) located at a lower level, the said vessel (19) being located at ground level below the level of the entire Claus plant, and
• the immersion chamber (16) is housed in a vessel (19) taking up the liquid sulphur from the immersion chamber (16),
• with the flowing sulphur overcoming a difference in altitude of at least 4.00 metres by gravity.

8. Process for the condensation, separation and storage of liquid sulphur according to Claim 7, **characterized in that** the sulphur is fed to the immersion chamber (16) at a temperature between 110°C and 300°C.

9. Process for the condensation, separation and storage of liquid sulphur according to either of Claims 7 and 8, **characterized in that** the sulphur is kept at a temperature between 110°C and 300°C by heating it in the immersion chamber (16) and in the vessel (19).

## Revendications

1. Dispositif pour la condensation, le dépôt et le stockage de soufre liquide, comprenant :
• une unité d'épuration de gaz (2), dans laquelle le sulfure d'hydrogène est éliminé du gaz de four de cokéfaction par épuration du gaz avec un liquide d'absorption, le liquide d'absorption chargé est régénéré, et le sulfure d'hydrogène formé sous forme concentrée est introduit dans l'unité de Claus, constituée par un four de Claus (4), une chaudière de récupération de chaleur (6) et un réacteur de Claus (9), et
• un four de Claus (4), dans lequel les composés de soufre sont brûlés avec de l'oxygène de l'air en soufre élémentaire,
• une chaudière de récupération de chaleur (6), dans laquelle le gaz de procédé quittant le four de Claus (4) est refroidi à une température nécessaire pour la condensation du soufre, de nouveau chauffé après le dépôt du soufre, et introduit dans un réacteur de Claus (9),
• un réacteur de Claus (9), dans lequel une partie du sulfure d'hydrogène restant est brûlé, et le dioxyde de soufre qui se forme est mis en réaction sur un catalyseur avec le sulfure d'hydrogène restant pour former du soufre,
• une chambre de condensation (11) associée au réacteur de Claus (9),
**caractérisé en ce que**
• l'unité de Claus et l'unité d'épuration de gaz (2) sont positionnés sur une plateforme en hauteur par rapport à un contenant chauffant (19) disposé au niveau du sol, dans lequel une chambre d'immersion de type siphon (16) est agencée, de telle sorte qu'aucun dispositif de transport ne soit nécessaire pour le transport du soufre dans la chambre d'immersion,
• la différence de hauteur entre l'unité de Claus et l'unité d'épuration de gaz (2) et le point de soutirage de soufre le plus bas de la chambre d'immersion (16) étant d'au moins 4,00 mètres.

2. Dispositif pour la condensation, le dépôt et le stockage de soufre liquide selon la revendication 1, **caractérisé en ce que** le contenant (19) et la chambre d'immersion (16) sont fabriqués en acier.

3. Dispositif pour la condensation, le dépôt et le stockage de soufre liquide selon l'une quelconque des revendications 1 ou 2, **caractérisé en ce que** la chambre d'immersion (16) est également équipée d'un dispositif pour le chauffage du soufre.

4. Dispositif pour la condensation, le dépôt et le stockage de soufre liquide selon l'une quelconque des revendications 1 à 3, **caractérisé en ce que** des contenants de réception ou des contenants de stockage sont attribués à l'unité de Claus ou au contenant (19) muni de la chambre d'immersion (16), qui sont reliés avec ceux-ci par des canalisations.

5. Dispositif selon la revendication 4, **caractérisé en ce que** le ou les contenants de stockage ou de réception sont fabriqués en acier.

6. Dispositif pour la condensation, le dépôt et le stockage de soufre liquide selon l'une quelconque des revendications 1 à 5, **caractérisé en ce que** le réacteur de Claus est présent à plusieurs reprises.

7. Procédé pour la condensation, le dépôt et le stockage de soufre liquide selon lequel :
• le sulfure d'hydrogène est éliminé du gaz de four de cokéfaction par épuration du gaz (2) avec un liquide d'absorption, le liquide d'absorption chargé est régénéré, et le sulfure d'hydrogène formé sous forme concentrée est introduit dans l'unité de Claus, et
• le sulfure d'hydrogène est mis en réaction dans un four de Claus (4) avec un gaz contenant de l'oxygène pour former du soufre, et le gaz de combustion est introduit dans une chaudière de récupération de chaleur (6), dans laquelle le soufre liquide est condensé, et
• le gaz de procédé refroidi est introduit dans un réacteur de Claus (9), dans lequel une partie du sulfure d'hydrogène restant est brûlé en dioxyde de soufre, et le dioxyde de soufre est mis en réaction dans le réacteur de Claus (9) avec du sulfure d'hydrogène pour former du soufre,
**caractérisé en ce que**
• le soufre est introduit par siphonage à partir de la chaudière de récupération de chaleur (6) et du réacteur de Claus (9) dans une chambre d'immersion (16), qui se trouve dans un contenant (19) disposé plus bas, qui se trouve au niveau du sol en dessous du niveau de hauteur de l'unité de Claus totale, et
• la chambre d'immersion (16) est disposée dans un contenant (19) dans lequel le soufre liquide s'écoule depuis la chambre d'immersion (16),
• celui-ci franchissant une différence de hauteur d'au moins 4,00 mètres lors de l'écoulement en raison de la force de pesanteur.

8. Procédé de condensation, de dépôt et de stockage de soufre liquide selon la revendication 7, **caractérisé en ce que** le soufre est introduit dans la chambre d'immersion (16) à une température de 110 à 300 °C.

9. Procédé de condensation, de dépôt et de stockage de soufre liquide selon l'une quelconque des revendications 7 ou 8, **caractérisé en ce que** le soufre est maintenu à une température de 110 à 300 °C par chauffage dans la chambre d'immersion (16) et dans le contenant (19).
